# EUROPEAN PATENT APPLICATION

(11) **EP 4 210 214 A1**
(43) Date of publication of application: **12.07.2023**
(21) Application number: 22213069.2
(22) Date of filing: 13.12.2022
(51) Int. Cl.: H02P 9/48, H02P 9/30, H02M 7/12

(54) **ACTIVE RECTIFICATION EXCITATION**

(30) Priority: 06.01.2022 US 202217570110
(71) Applicant: Hamilton Sundstrand Corporation, Charlotte, NC 28217-4578 (US)
(72) Inventor: FOX, Brennan, Geneseo, IL (US); VANDERGRIFT, Adrian E., Rockton, IL (US)
(74) Representative: Dehns

(57) **Abstract**

A system (100) includes an alternating current (AC) bus (102). An active rectifier (104) is connected to receive alternating current from the AC bus. An exciter inductor coil (106) is connected to receive direct current (DC) output from the active rectifier (104). A method includes performing current control on an alternating current (AC) bus (102) to output DC current to an exciter inductor coil (106).

## Description

### BACKGROUND

### 1. Field

The present disclosure relates to excitation for electric machines, and more particularly to rectification for exciting excitation coils such as in electric generators.

### 2. Description of Related Art

Traditional generator excitation topologies utilize a passive rectifier and DC link capacitance to create a supply that is switched to drive the excitation current. This topology requires a large capacitance. The large capacitance contains significant amounts of energy which need to be dissipated in the event of a fault along with the energy in the excited inductor.

The conventional techniques have been considered satisfactory for their intended purpose. However, there is an ever present need for improved systems and methods for rectification for excitation in electric machines such as generators. This disclosure provides a solution for this need.

### SUMMARY

A system includes an alternating current (AC) bus. An active rectifier is connected to receive alternating current from the AC bus. An exciter inductor coil is connected to receive direct current (DC) output from the active rectifier.

The active rectifier can include a positive DC output line and a negative DC output line. The exciter inductor coil can be connected in series between the positive DC output line and the negative DC output line. The active rectifier and the exciter inductor coil can be the only components connected across from the positive DC output line to the negative DC output line. An electric machine can be operatively connected to receive excitation from the exciter conductor coil.

The AC bus can include three AC lines. The active rectifier can include a first pair of switches connected across the positive and negative DC output lines with a first one of the AC lines connected to a node between the first pair of switches, a second pair of switches connected across the positive and negative DC output lines in parallel with the first pair of switches, wherein a second one of the AC lines is connected to a node between the second pair of switches, and a third pair of switches connected across the positive and negative DC output lines in parallel with the first and second pairs of switches, wherein a third one of the AC lines is connected to a node between the second pair of switches.

A controller can be connected to individually control each of the switches in the first, second, and third pairs of switches. The controller can be connected to receive input from a sensor operatively connected to output a signal to the controller indicative of current passing through the positive DC output line and/or indicative of output voltage of an electric machine whose output voltage is controlled by current passing through the exciter inductor coil. The controller can be configured to control switching frequency and/or duty cycle of the switches to reach a target current and/or voltage based on the signal from the current sensor.

A first y-connected capacitor can be connected between the first AC line and a capacitance node. A second y-connected capacitor can be connected between the second AC line and the capacitance node. A third y-connected capacitor can be connected between the third AC line and the capacitance node.

A method includes performing current control on an alternating current (AC) bus to output DC current to an exciter inductor coil. Performing current control can include actively rectifying between the AC bus and a pair of DC output lines without a buck-boost on the DC output current. The method can include receiving a signal indicative of DC output to the exciter inductor coil, and changing a switching frequency to reach a target current at the exciter inductor coil. The method can include receiving a signal indicative of DC output to the exciter inductor coil, and changing a switching duty cycle to reach a target current at the exciter inductor coil. The method can include storing energy in capacitors connected to the AC bus. The method can include using the exciter inductor coil to drive excitation in an electric machine.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described in detail herein below with reference to certain figures, wherein:
Fig. 1 is a schematic view of an embodiment of a system constructed in accordance with the present disclosure, showing the alternating current (AC) bus, active rectifier, and excitation inductor coil; and
Fig. 2 is a schematic circuit level view of the system of Fig. 1, showing the switches of the active rectifier and the y-connected capacitors of the AC bus.

### DETAILED DESCRIPTION OF THE PREFERRED EMBODIMENTS

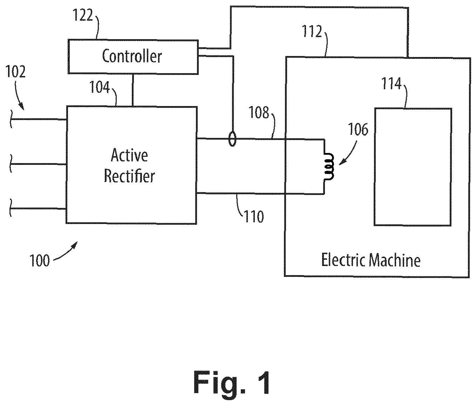

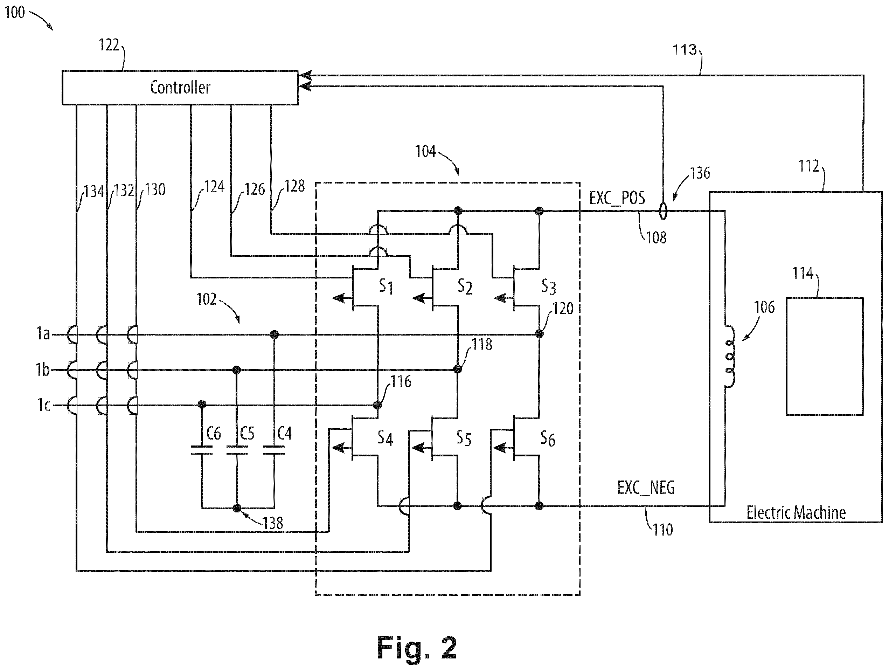

Reference will now be made to the drawings wherein like reference numerals identify similar structural features or aspects of the subject disclosure. For purposes of explanation and illustration, and not limitation, a partial view of an embodiment of a system in accordance with the disclosure is shown in Fig. 1 and is designated generally by reference character 100. Other embodiments of systems in accordance with the disclosure, or aspects thereof, are provided in Fig. 2, as will be described. The systems and methods described herein can be used to provide direct current (DC) power to excitation coils, such as used in electric motors, generators, and motor/generator units that can change between a generator mode and a motor mode.

The system 100 includes an alternating current (AC) bus 102. An active rectifier 104 is connected to receive alternating current from the AC bus 102. An exciter inductor coil 106 is connected to receive direct current (DC) output from the active rectifier 104. The active rectifier 104 includes a positive DC output line 108 and a negative DC output line 110. The exciter inductor coil 106 is connected in series between the positive DC output line 108 and the negative DC output line 110. The active rectifier 104 and the exciter inductor coil 106 may be the only components connected across from the positive DC output line 108 to the negative DC output line 110, e.g. other components such as inductors, diodes, capacitors, switches, or the like are not required to be connected across from line 108 to line 110. An electric machine 112 is operatively connected to receive excitation from the exciter conductor coil 106, e.g. to excite an armature winding 114 in the electric machine 112. The electric machine 112 can be a motor, generator, or combined generator/motor unit that can switch between a generator mode and a motor mode.

With reference now to Fig. 2, the AC bus 102 includes three AC lines, labeled Ia, Ib, and Ic. The active rectifier 104 includes a first pair of switches S1, S4 connected across the positive and negative DC output lines 108, 110 with the AC line Ic connected to a node 116 between the first pair of switches S1, S4. A second pair of switches S2, S5 are connected across the positive and negative DC output lines 108, 110 in parallel with the first pair of switches S1, S4. The AC line Ib is connected to a node 118 between the second pair of switches S2, S5. A third pair of switches S3, S6 is connected across the positive and negative DC output lines 108, 110 in parallel with the first and second pairs of switches S1, S4, and S2, S5. The AC line Ia is connected to a node 120 between the second pair of switches S3, S6. The switches can be any suitable type of switches such as MOSFETs, JFETs, or the like.

A controller 122 is connected to, e.g. by lines 124, 126, 128, 130, 132, 134 individually connected to the respective gates for control each of the switches S1, S2, S3, S4, S5, S6. The controller 122 can be connected to receive input from a sensor 136 operatively connected to output a signal to the controller 122 indicative of current passing through the positive DC output line 108. The controller 122 can also be connected to receive input from a sensor 113 labeled in Fig. 2, to output a signal to the controller 122 indicative of the output voltage of an electric machine whose output voltage is controlled by the current passed through the excitation coil 106. The controller 122 is configured to control switching frequency and/or duty cycle of the switches S1-S6 to reach a target current and/or voltage in the positive DC output line 108 based on the signal from the sensor 136 and/or a to reach a target output voltage on the electric machine based on the signal from sensor 113.

A first y-connected capacitor C4 is connected between the first AC line Ia and a capacitance node 138. A second y-connected capacitor C5 is connected between the second AC line Ib and the capacitance node 138. A third y-connected capacitor C6 is connected between the third AC line Ic and the capacitance node 138. All of the y-connected capacitors C4-C6 are connected on the AC side of the active rectifier 104 for storage of energy during switching of the switches. While y-connected capacitors are shown and described here, those skilled in the art will readily appreciate that other ways of connecting the capacitors can also be used, such as delta-connected capacitors for example. Having the capacitors C4-C6 on the AC side of the active rectifier 104 instead of on the DC-side allows for smaller capacitance, and smaller amounts of energy that must be safely dissipated in the event of a fault, relative to systems with capacitance on the DC-side. This can mean smaller size and less weight than in traditional systems with larger capacitance requirements. The AC capacitor connection helps ensure that there will be a discharge path such that the capacitance will likely not stay charged in the event of a fault.

With continued reference to Fig. 2, a method includes performing current control on an alternating current (AC) bus, e.g. AC bus 102, to output DC current to an exciter inductor coil, e.g., exciter inductor coil 106. Performing current control can include actively rectifying between the AC bus and a pair of DC output lines, e.g lines 108, 110, without a buck-boost on the DC output current. The method can include receiving a signal indicative of DC output to the exciter inductor coil, e.g. using a sensor such as sensor 136, and changing a switching frequency and/or duty cycle, e.g. of switches S1-S6, to reach a target current at the exciter inductor coil. The method can include storing energy in capacitors connected to the AC bus, e.g. capacitors C4-C6. The method can include using the exciter inductor coil to drive excitation in an electric machine, e.g. electric machine 112 of Fig. 1. The method can include receiving a signal indicative of AC output voltage from the electric machine, e.g. using a sensor such as sensor 113, and changing a switching frequency and/or duty cycle, e.g. of switches S1-S6, to reach a target voltage at the output of the electric machine.

Utilizing an active rectification strategy for a current source inverter as disclosed herein, the excitation inductor, e.g. coil 106, can be used as the energy storage element for the rectifier 104. This can reduce or eliminate the need for a large DC capacitance. Systems and methods as disclosed herein can perform AC voltage (or AC current) to DC current control/conversion. Potential benefits include increased power density for exciter drive circuits.

The methods and systems of the present disclosure, as described above and shown in the drawings, provide for direct current (DC) power to excitation coils, such as used in electric motors, generators, and motor/generator units that can change between a generator mode and a motor mode. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A system (100) comprising:
an alternating current, AC, bus (102);
an active rectifier (104) connected to receive alternating current from the AC bus (102); and
an exciter inductor coil (106) connected to receive direct current, DC, output from the active rectifier (104).

2. The system as recited in claim 1, wherein the active rectifier (104) includes a positive DC output line (108) and a negative DC output line (110), wherein the exciter inductor coil (106) is connected in series between the positive DC output line (108) and the negative DC output line (110).

3. The system as recited in claim 1 or 2, wherein the active rectifier (104) and the exciter inductor coil (106) are the only components connected across from the positive DC output line (108) to the negative DC output line (110).

4. The system as recited in any preceding claim, wherein the AC bus (102) includes three AC lines (Ia, Ib, Ic), wherein the active rectifier (104) includes:
a first pair of switches (S1, S4) connected across the positive and negative DC output lines (108, 110) with a first one of the AC lines connected to a node (116) between the first pair of switches (S1, S4);
a second pair of switches (S2, S5) connected across the positive and negative DC output lines (108, 110) in parallel with the first pair of switches (S1, S4), wherein a second one of the AC lines is connected to a node (118) between the second pair of switches (S2, S5); and
a third pair of switches (S3, S6) connected across the positive and negative DC output lines (108, 110) in parallel with the first and second pairs of switches (S1, S4, S2, S5), wherein a third one of the AC lines is connected to a node (120) between the second pair of switches (S2, S5).

5. The system as recited in claim 4, wherein a controller (122) is connected to individually control each of the switches in the first, second, and third pairs of switches (S 1-S6).

6. The system as recited in claim 5, wherein the controller (122) is connected to receive input from a sensor (136) operatively connected to output a signal to the controller (122) indicative of current passing through the positive DC output line and/or indicative of output voltage of an electric machine whose output voltage is controlled by current passing through the exciter inductor coil (106).

7. The system as recited in claim 6, wherein the controller (122) is configured to control switching frequency and/or duty cycle of the switches to reach a target current and/or voltage based on the signal from the current sensor.

8. The system as recited in claim 4, further comprising:
a first y-connected capacitor (C4) connected between the first AC line and a capacitance node (138);
a second y-connected capacitor (C5) connected between the second AC line and the capacitance node (138); and
a third y-connected capacitor (C6) connected between the third AC line and the capacitance node (138).

9. The system as recited in any preceding claim, further comprising an electric generator (112) operatively connected to receive excitation from the exciter conductor coil (106).

10. A method comprising:
performing current control on an alternating current (AC) bus to output DC current to an exciter inductor coil.

11. The method as recited in claim 10, wherein performing current control includes actively rectifying between the AC bus and a pair of DC output lines without a buck-boost on the DC output current.

12. The method as recited in claim 10 or 11, further comprising receiving a signal indicative of DC output to the exciter inductor coil and/or indicative of output voltage of an electric machine whose output voltage is controlled by current passing through the exciter inductor coil, and changing a switching frequency to reach a target current at the exciter inductor coil.

13. The method as recited in any of claims 10-12, further comprising receiving a signal indicative of DC output to the exciter inductor coil and/or indicative of output voltage of an electric machine whose output voltage is controlled by current passing through the exciter inductor coil, and changing a switching duty cycle to reach a target current at the exciter inductor coil.

14. The method as recited in any of claims 10-13, further comprising storing energy in capacitors connected to the AC bus.

15. The method as recited in any of claims 10-14, further comprising using the exciter inductor coil to drive excitation in an electric machine.
